# FASCICULE DE BREVET EUROPEEN

(11) **EP 1 690 446 B1**
(45) Date de publication et mention de la délivrance du brevet: **23.04.2008**
(21) Numéro de dépôt: 06101142.5
(22) Date de dépôt: 01.02.2006
(51) Int. Cl.: A01D 75/30

(54) **Engin agricole pour la coupe de produits**
Landwirtschaftliches Gerät für das Mähen von Produkten
Agricultural machine for cutting products

(30) Priorité: 09.02.2005 FR 0550384
(43) Date de publication de la demande: 16.08.2006
(73) Titulaire: KUHN S.A., 67706 Saverne Cedex (FR)
(72) Inventeur: HIRONIMUS, Jeannot, 67440, SCHWEBWILLER (FR)
(74) Mandataire: Andres, Jean-Claude

(56) Documents cités:
- EP-A- 0 113 335
- EP-A- 1 405 556
- EP-A- 1 468 598
- FR-A- 2 837 347

## Description

La présente invention se rapporte à un engin agricole comportant un véhicule porteur et plusieurs unités de travail destinées à couper des plants sur pied, lesdites unités de travail étant liées audit véhicule porteur.

Il existe dans l'état de la technique une faucheuse automotrice comportant un véhicule porteur et trois unités de travail de manière à couvrir une large surface de coupe et améliorer la productivité de la machine. Plus précisément, cette faucheuse comporte une unité de travail frontale et deux unités de travail latérales. Cette faucheuse dispose d'une largeur de travail pouvant atteindre un peu plus de 9 mètres. Pour la déplacer sur les routes, il a été nécessaire de prévoir une position de transport de largeur réduite dans laquelle les unités de travail latérales sont pivotées à la verticale.

Afin d'augmenter encore davantage la largeur de travail et d'accroître ainsi les performances de coupe, il a été envisagé un nombre plus important d'unités de travail. Le brevet FR 2 837 347 prévoit notamment la possibilité d'utilisation d'au moins deux unités de travail frontales, situées dans la direction d'avance du véhicule porteur en avant de celui-ci, et au moins deux unités de travail latérales. Il est prévu une position de transport pour chaque unité de travail et plus particulièrement une position de repliement sensiblement à la verticale pour les deux unités de travail latérales.

Il a été commercialisé récemment un tel véhicule porteur comportant trois unités de travail frontales et deux unités de travail latérales. Les unités de travail latérales de cet engin agricole sont articulées sur les côtés et au milieu du véhicule porteur et déployées au moyen de bras télescopiques. (voir EP-A-1405556).

Les unités de travail latérales, dans la technique antérieure connue, sont perpendiculaires à la longueur du véhicule porteur et situées entre les groupes de pneumatiques, soit sensiblement au milieu du véhicule, ou à l'arrière dudit véhicule. Cette configuration des unités de travail latérales présente l'inconvénient que le conducteur du véhicule porteur ne peut facilement visualiser en permanence toutes les unités de travail et anticiper des mouvements du terrain ou des obstacles en soulevant lesdites unités de travail, en braquant pour éviter lesdits obstacles ou encore en adaptant la vitesse dudit véhicule. Ledit ordonnancement des unités de travail latérales présente en plus un inconvénient majeur lors du déplacement de l'engin agricole dans les courbes.

En effet, dans cette configuration d'utilisation les unités de travail ne permettent plus de disposer d'une zone de recoupe, c'est-à-dire d'une zone de chevauchement entre les unités de travail, et il se trouve donc des bandes de terrain non coupées, ces bandes étant d'autant plus importantes que le virage de l'engin agricole est plus prononcé. Pour pallier à ce problème, les zones de recoupe peuvent être augmentées lorsque l'engin agricole négocie une courbe, mais cela conduit à un coût d'ensemble de l'engin agricole plus élevé avec une solution non complètement satisfaisante.

Les rotations et les virages du véhicule porteur dans les champs étant extrêmement fréquents, ce problème de coupe complète des plants est important à résoudre pour de nombreux exploitants agricoles.

Dans les engins agricoles précédemment décrits et dans le cadre de la présente invention, les unités de travail disposées autour du véhicule porteur peuvent être des éléments de coupe des plants seuls, ou des éléments de coupe associés à des dispositifs de conditionnement du fourrage, soit donc des engins agricoles classés dans les catégories des faucheuses ou des faucheuses conditionneuses. De tels engins agricoles peuvent aussi comporter des dispositifs d'épandage large ou des dispositifs de regroupement des plants coupés en andains, en vue de faciliter leur reprise au moyen d'une ensileuse par exemple.

Afin de couper des surfaces de travail aussi importantes que possible, les unités de travail disposent de longueurs de plus en plus grandes. Le repliement desdites unités de travail autour du véhicule porteur dans la position de transport, afin de respecter la dimension maximale autorisée pour les déplacements sur les voies publiques, conduit à un problème sérieux concernant la visibilité depuis la cabine dudit véhicule porteur pour la conduite et à de grandes difficultés pour le placement des unités de travail autour du véhicule porteur.

Il se pose donc un problème lié à la fois au positionnement des unités de travail de manière aussi fonctionnelle que possible pendant le travail, notamment pour des unités de travail de grandes dimensions, et une difficulté liée à la configuration de transport qui doit permettre une conduite aisée de l'engin agricole sur les voies publiques.

L'invention a donc pour objectif de résoudre ces principales difficultés en garantissant une bonne visibilité au conducteur dans toutes les conditions de travail et de transport, et ceci en toute sécurité quelles que soient les conditions de travail.

La présente invention concerne donc un engin agricole pour la coupe de produits sur pied, comportant un véhicule porteur auquel sont liées au moins une unité de travail frontale disposée, lors du travail et en vue suivant une direction d'avance du véhicule, en avant dudit véhicule porteur, et au moins deux unités de travail latérales dsposées, lors du travail, de part et d'autre d'une zone de travail de ladite(desdites) unité(s) de travail frontale(s) et situées en arrière de ladite(desdites) unité(s) de travail frontale(s), caractérisé par le fait que les unités de travail latérales sont liées à des bras porteurs qui sont articulés sur le véhicule porteur et qui permettent de déplacer lesdites unités de travail latérales dans au moins une position de travail située sensiblement au niveau des roues avant du véhicule porteur et dans une position repliée de transport, et par le fait que le véhicule porteur comporte une cabine de pilotage déplaçable vers l'avant ou vers l'arrière dudit véhicule porteur.

La disposition des unités de travail latérales et la configuration de repliement autour du véhicule porteur selon l'invention conduisent à un engin agricole disposant d'un bon rendement avec une largeur de transport réduite.

Par ailleurs, le placement desdites unités de travail latérales sensiblement au niveau des roues avant et sur les côtés du véhicule porteur ainsi que le déplacement de la cabine de pilotage vers l'avant lorsque les unités de travail latérales sont dans cette position avancée, permettent une bonne visibilité sur toutes les unités de travail.

En outre, dans cette configuration selon l'invention, le centre instantané de rotation, lors des virages ou des demi-tours, se situe sensiblement sur une ligne passant par les unités de travail latérales, ce qui permet de conserver une bonne zone de recoupe entre les unités de travail frontales et les unités de travail latérales, en vue d'éviter qu'il subsiste des bandes de terrain non coupées entre elles.

L'utilisation d'un engin agricole avec de multiples unités de travail selon l'invention offre une combinaison permettant un débit de chantier élevé.

D'autres caractéristiques et avantages de l'invention se dégageront de la description qui va suivre en regard des dessins annexés qui ne sont donnés qu'à titre d'exemples non limitatifs. Dans ces dessins :
- La figure 1 est une vue de dessus d'un engin agricole selon l'invention disposant de deux unités de travail frontales et de deux unités de travail latérales, les unités de travail étant en position de travail ;
- La figure 2 est une vue de dessus de l'engin agricole représenté sur la figure 1 dans laquelle les unités de travail sont repliées en position de transport et dans laquelle la cabine de pilotage est également déplacée en position de transport ;
- La figure 3 illustre l'engin agricole représenté sur la figure 1 lors du travail dans une courbe, avec les unités de travail en position de travail :

- La figure 4 illustre l'engin agricole représenté sur la figure 1 dans une autre position de travail ;
- La figure 5 représente un engin agricole selon un deuxième mode de réalisation de l'invention, les unités de travail étant en position de travail ;
- La figure 6 illustre la position de transport des unités de travail de l'engin agricole selon le deuxième mode de réalisation de l'invention représenté dans la figure 5 avec la cabine de pilotage pivotée de 180°.

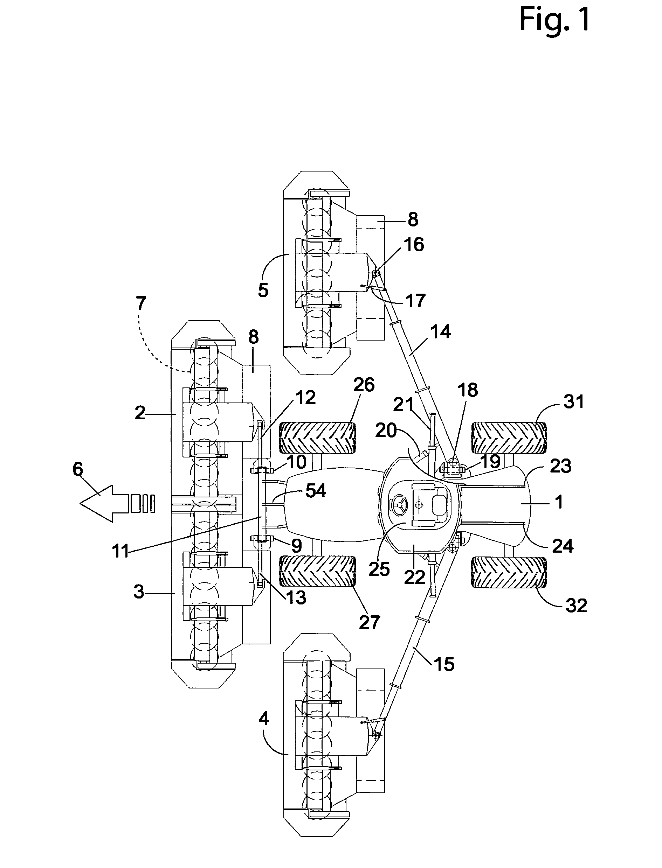

Dans un premier mode de réalisation de l'invention illustré sur la figure 1, le véhicule porteur (1) dispose de quatre unités de travail : deux unités de travail frontales (2, 3) et deux unités de travail latérales (4, 5). Dans la position de travail illustrée par cette figure 1, la direction d'avance (6) représentée par la flèche est celle du travail dans le champ.

Dans l'exemple représenté, l'engin agricole est une faucheuse-conditionneuse. A cet effet, les unités latérales (4, 5) et frontales (2, 3) comportent au moins une barre de coupe (7), un dispositif de conditionnement des plants (non représenté en détail) situé en partie au-dessus de ladite barre de coupe (7) et un dispositif (8) de regroupement de ces plants coupés en andains.

Chaque barre de coupe (7) est constituée d'une manière connue en soi d'une barre de coupe avec des disques de coupe entraînés en rotation au travail.

Divers dispositifs connus de conditionnement des plants immédiatement après la coupe et permettant de traiter les plants afin d'en accélérer le temps de séchage et de raccourcir le délai avant collecte, sont envisageables, tels qu'un rotor avec des fléaux ou des rouleaux de compression par exemple. Les dispositifs de regroupement (8) peuvent être constitués par des bandes transporteuses ou d'autres dispositifs connus. Les disques des barres de coupe (7), les dispositifs de conditionnement des produits et les dispositifs de regroupement (8) des produits peuvent être animés hydrauliquement, mécaniquement ou autre depuis le véhicule porteur (1).

Les deux unités de travail frontales (2, 3) sont reliées et articulées au moyen d'axes (9 et 10) respectifs dirigés dans la direction d'avance (6) à un support commun (11). Elles sont déplaçables en hauteur autour desdits axes (9 et 10) au moyen de vérins hydrauliques (12 et 13) correspondants. Le support (11) est accouplé à un dispositif d'attelage (54) du véhicule porteur (1), lequel dispositif d'attelage (54) permet de soulever et d'abaisser le support (11) et les deux unités de travail frontales (2 et 3).

Les deux unités de travail latérales (4, 5) sont montées aux extrémités de bras télescopiques (14, 15) respectifs au moyen d'axes (16) sensiblement verticaux en position de travail. Des vérins hydrauliques (17) respectifs qui sont liés auxdits bras (14, 15) et aux unités latérales (4, 5), permettent de pivoter ces dernières autour des axes (16) pour modifier leur orientation. Les bras télescopiques (14 et 15) sont liés sur les côtés du véhicule porteur (1), sensiblement à hauteur du tiers arrière de celui-ci. Pour chaque bras (14 et 15), cette liaison est réalisée au moyen d'un axe sensiblement vertical (18) autour duquel il peut être déplacé dans un plan sensiblement horizontal, et d'un axe sensiblement horizontal (19) permettant de le relever jusque dans une position sensiblement verticale. Les déplacements autour de ces axes (18 et 19) sont effectués au moyen de vérins hydrauliques (20 et 21) respectifs qui sont articulés d'une part sur le véhicule porteur (1) et d'autre part sur le bras (14, 15) correspondant.

Les bras (14 et 15) sont avantageusement réalisés en plusieurs parties télescopiques en vue de pouvoir éloigner ou rapprocher les unités de travail latérales (4 et 5) du véhicule porteur (1). L'actionnement des parties télescopiques est réalisé de manière connue en soi au moyen de vérins hydrauliques par exemple.

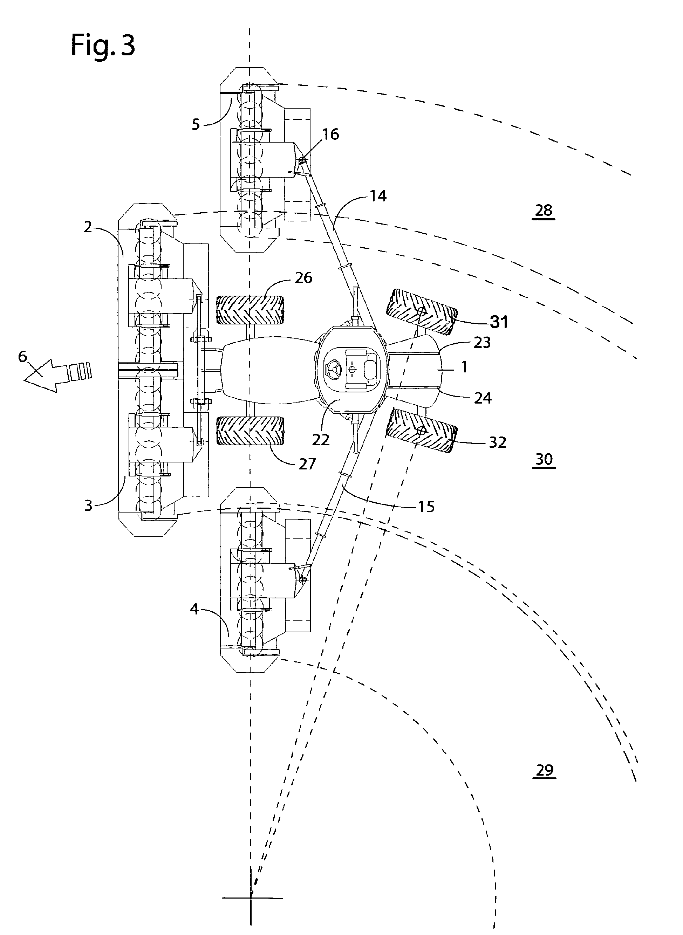

Les bras télescopiques (14 et 15) permettent le positionnement des unités de travail latérales (4, 5) sensiblement dans l'axe de l'essieu des roues avant (9, 10) du véhicule porteur (1) (voir figures 1 et 3).

Dans cet agencement des unités de travail (2, 3, 4, 5), les surfaces de coupe des unités de travail latérales (4, 5) recoupent les surfaces de coupe des unités de travail frontales (2, 3) de manière à ne pas laisser de bandes non coupées de plants.

Dans cette position de travail, la cabine de pilotage (22) du véhicule porteur (1) est orientée dans la direction d'avance (6) pour le travail et se situe avantageusement, en vue de dessus, entre les bras télescopiques (14 et 15). Dans cette position, le conducteur a une très bonne visibilité sur toutes les unités de travail (2, 3, 4, 5) et peut donc aisément surveiller lesdites unités de travail sans se fatiguer, même pendant de nombreuses heures de conduite.

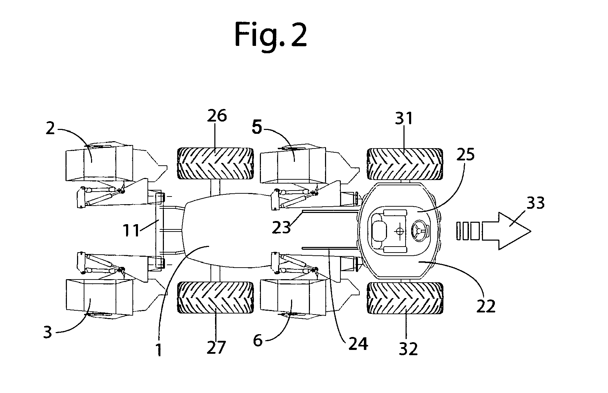

La cabine de pilotage (22) est montée sur des rails (23 et 24) sur lesquels elle peut être déplacée longitudinalement. De plus, le poste de pilotage (25) dans ladite cabine (22) peut être tourné de 180° en vue d'une inversion de la direction d'avance pour le transport représentée par la flèche (33) sur la figure 2.

La figure 3 illustre le véhicule porteur (1) dans sa position de travail selon la figure 1 et se déplaçant dans la direction d'avance (6) selon une courbe que présente le champ à faucher. Le placement des unités de travail latérales (4, 5) sensiblement sur l'axe de l'essieu des roues (26 et 27) montre que les zones de coupe (28 et 29) des unités de travail latérales (4 et 5) recoupent la zone de coupe (30) de l'ensemble des unités de travail frontales (2 et 3).

Dans cette position de travail, ce sont les roues arrière (31 et 32) qui pivotent pour permettre la direction de l'ensemble véhicule porteur (1) et unités de travail (2, 3, 4,5).

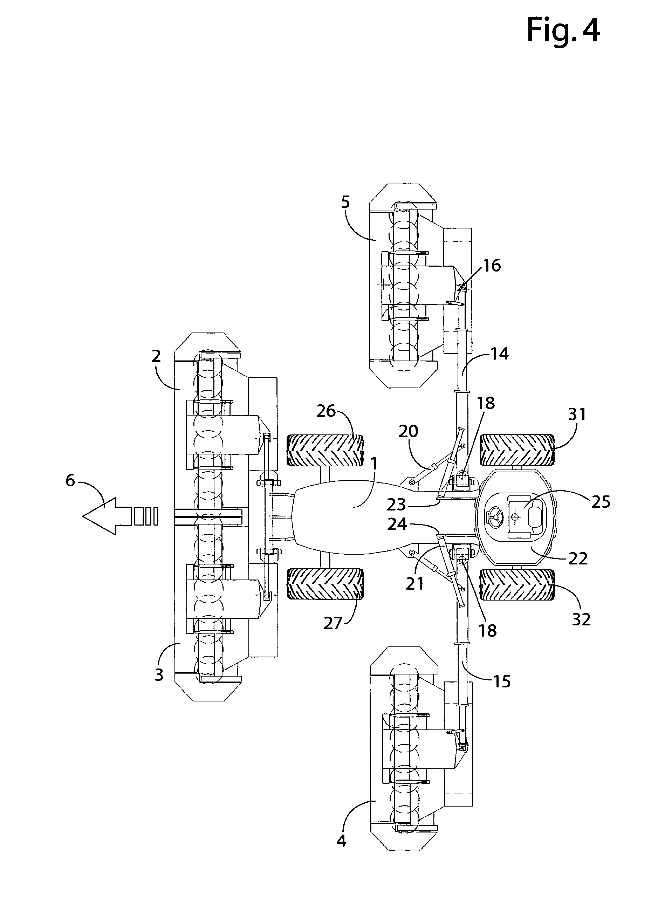

La figure 4 illustre une deuxième position de travail qui sera de préférence choisie pour le travail sur des terrains présentant d'importantes dénivellations. Dans cette position, la cabine de pilotage (22) a été déplacée vers l'arnère sur les rails (23 et 24). Les unités de travail latérales (4 et 5) ont également été pivotées vers l'arrière autour des axes (18) de leurs bras porteurs (14 et 15) au moyen des vérins hydrauliques (20), et leur orientation a été corrigée par pivotement autour de leur axe (16) respectif grâce aux vérins (17). De plus, lesdits bras porteurs (14 et 15) ont été quelque peu raccourcis de manière à conserver un recouvrement suffisant des zones de travail (28, 29 et 30). De cette sorte, les deux unités de travail latérales (4, 5) sont situées, en vue de dessus, dans une zone s'étendant entre les roues avant (26, 27) et les roues arrière (31, 32) du véhicule porteur (1). Dans cette position, la masse des unités de travail (2, 3, 4, 5) est alors mieux répartie sur le véhicule porteur (1), ce qui améliore substantiellement la stabilité de l'engin agricole durant les déplacements dans de tels terrains accidentés. Bien entendu, il peut être parfaitement prévu que les deux unités de travail latérales (4, 5) puissent occuper différentes positions de travail intermédiaires situées entre la première position de travail (figures 1 et 3) et cette deuxième position de travail en fonction du report de masses que l'on souhaite obtenir (le report de masses sur les roues arrière (31, 32) et la largeur de travail de l'engin agricole étant inversement proportionnels).

La figure 2 illustre la position de transport dans laquelle les unités de travail frontales (2, 3) et les unités de travail latérales (4, 5) ont été repliées dans une position sensiblement verticale sous l'action combinée des vérins hydrauliques (12, 13, 17, 20 et 21), ainsi que des vérins hydrauliques actionnant la translation des parties télescopiques des bras (14, 15) placés de part et d'autre du véhicule porteur (1).

Le repliement des unités de travail frontales (2, 3) a pour effet de les positionner sensiblement à l'arrière des roues (26, 27) lorsque le véhicule porteur (1) se déplace dans la direction de transport (33).

Les unités de travail latérales (4, 5) sont placées dans une configuration repliée à la verticale entre les groupes de roues (26-27 et 31-32) du véhicule porteur (1).

L'ensemble des unités de travail (2, 3, 4, 5), après repliement, n'augmente guère ou relativement peu la largeur hors-tout de l'engin agricole.

Dans cette position de transport, la cabine de pilotage (22) est déplacée sur les rails (23 et 24) jusqu'à l'extrémité du véhicule porteur (1) et le poste de pilotage (25) a été pivotée de 180° autour d'un axe vertical de manière à permettre le déplacement du véhicule porteur (1) dans la direction de transport symbolisée par la flèche (33). Cette direction de transport (33) est opposée à la direction d'avance (6) pour le travail de coupe des plants.

Le déplacement de la cabine de pilotage (22) dans la position de transport permet de dégager de la place sur le véhicule porteur (1) pour le rangement des unités de travail latérales (4, 5). En outre, la position avancée de ladite cabine de pilotage (22) donne au conducteur une bonne visibilité durant le transport.

Il apparaît clairement sur la figure 2 que, dans cette position de transport, le conducteur du véhicule porteur (1) n'est en rien gêné par les unités de travail latérales (4, 5) et frontales (2, 3) repliées pour la conduite sur les routes, dans la direction de transport (33).

Ainsi, de manière avantageuse selon l'invention, la cabine de pilotage (22) du véhicule porteur (1) peut être déplacée longitudinalement et le poste de pilotage (25) peut être inversé autour d'un axe vertical de manière à permettre un déplacement de l'engin agricole, lorsque les unités de travail frontales (2, 3) et latérales (4, 5) sont en position de transport, dans la direction de transport (33) opposée à celle de la direction d'avance (6) durant le travail.

L'engin agricole est adapté, notamment en terme de motorisation, et notamment en terme de moyens de conduite, pour permettre le déplacement dans les deux directions (6) et (33).

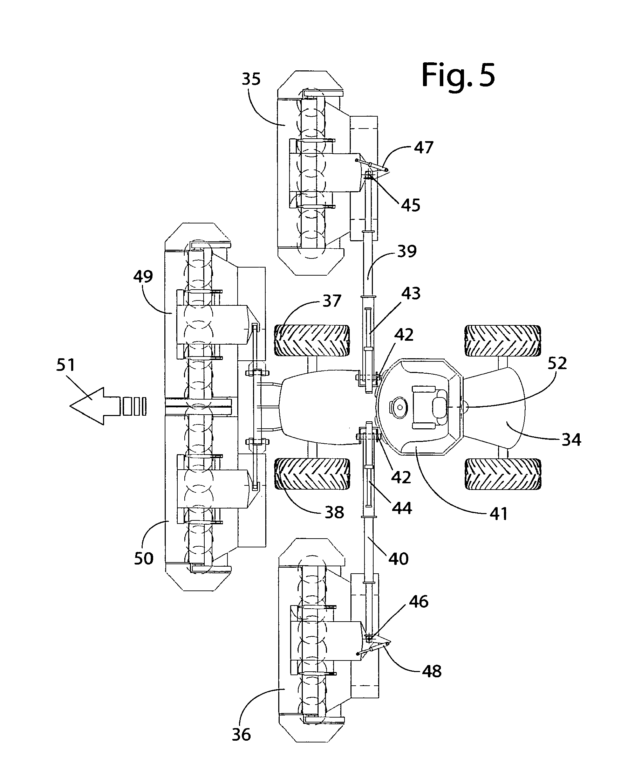

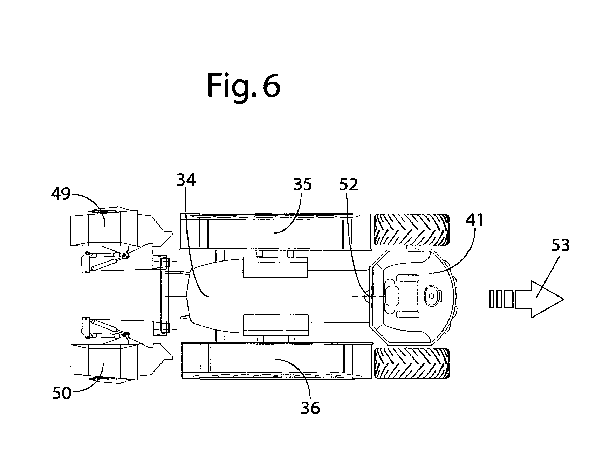

Selon un deuxième mode de réalisation illustré sur les figures 5 et 6 le véhicule porteur (34) comporte des unités de travail latérales (35, 36) toujours positionnées au niveau des roues avant (37, 38) et dans l'axe de l'essieu reliant ces deux roues avant (37, 38). Toutefois, les bras télescopiques (39, 40) sont placés en avant de la cabine de pilotage (41) et sensiblement perpendiculairement par rapport au véhicule porteur (34). Ces bras télescopiques (39, 40) sont articulés sur le véhicule porteur (34) au moyen d'axes sensiblement horizontaux (42) situés en avant de la cabine de pilotage (41) et dirigés dans la direction d'avance (51). Lesdits bras télescopiques (39, 40) peuvent être déplacés autour de ces axes (42) à l'aide de vérins hydrauliques (43 et 44) respectifs qui sont reliés par ailleurs au véhicule porteur (34). Les unités de travail latérales (35 et 36) sont articulées sur les extrémités de ces bras (39, 40) à l'aide d'axes (45, 46) respectifs sensiblement verticaux en position de travail, et peuvent être pivotées autour de ces axes (45, 46) au moyen de vérins hydrauliques (47, 48).

Dans ce deuxième mode de réalisation, les unités de travail frontales (49 et 50) sont positionnées de manière identique au premier mode de réalisation.

Le véhicule porteur (34) se déplace dans la direction d'avance (51) pour le travail.

Outre le positionnement des bras télescopiques (39, 40) sur le véhicule porteur (34), ce deuxième mode de réalisation se distingue également par la cabine de pilotage (41) qui est montée sur un pivot (52) de manière à pouvoir tourner de 180° et être ainsi orientée dans la direction opposée (53) tel que représentée sur la figure 6.

La rotation de la cabine de pilotage (41), autorise plusieurs variantes pour le positionnement des unités de travail latérales (35, 36) en position de transport.

L'une de ces variantes est représentée sur la figure 6 dans laquelle la cabine de pilotage (41) a été déplacée dans la direction de transport (53). Cette direction de transport (53) est opposée à la direction d'avance (51) durant le travail, comme pour le premier mode de réalisation.

Pour atteindre la position de la cabine de pilotage (41) illustrée dans la figure 6, ladite cabine de pilotage (41) a été pivotée de 180° autour du pivot vertical (52) par tout moyen connu.

Dans cette position de transport, les unités de travail frontales (49 et 50) ont été repliées à la verticale, comme précédemment, alors que les unités de travail latérales (35, 36) ont été d'une part repliées vers le haut, autour des axes (42) de leurs bras porteurs respectifs (39 et 40) et d'autre part pivotées dans une position sensiblement horizontale par pivotement autour des axes (45 et 46) au moyen des vérins hydrauliques (47 et 48). Les bras porteurs télescopiques (39 et 40) sont par ailleurs raccourcis afin de réduire la hauteur de l'ensemble.

Dans la position de transport représentée sur la figure 6, les unités de travail latérales (35 et 36) sont placées le long du véhicule porteur (34), à l'arrière de la cabine de pilotage (41) et partiellement au-dessus des roues (37, 38).

Ce deuxième mode de réalisation autorise de fait différents positionnements possibles, à la verticale, ou à l'horizontale, voire même en oblique, des unités de travail latérales (35, 36), le long du véhicule porteur (34). Dans ce mode de réalisation, comme dans le précédent, le déplacement de la cabine de pilotage (41) libère de la place sur le véhicule porteur (34) pour agencer les unités de travail latérales (35, 36) en position de transport.

Plusieurs variantes sont possibles quant aux modes de repliement des unités de travail autour du véhicule porteur et pour le placement desdites unités de travail en position de transport, notamment en configuration horizontale ou verticale, sans sortir du cadre de l'invention.

Il peut être envisagé un nombre plus ou moins grand d'unités de travail frontales et latérales et lesdites unités de travail peuvent être des faucheuses, des faucheuses conditionneuses ou même d'autres unités de travail devant opérer sur des grandes largeurs sans que des espaces non traités soient engendrés par les manoeuvres et les rotations de l'engin agricole.

La cabine de pilotage peut être de différentes formes et dimensions, contenir l'ensemble des fonctionnalités usuelles associées aux unités de travail et à la conduite du véhicule porteur ou seulement une partie.

Il peut être prévu en variante du premier mode de réalisation, une cabine de pilotage pouvant se déplacer uniquement longitudinalement le long du véhicule porteur, sur des rails par exemple, avec, dans ce cas, un deuxième volant et les commandes nécessaires en double, avec éventuellement un siège pivotant pour le conducteur, ou un deuxième poste de pilotage pour la direction opposée. Les différentes combinaisons possibles en translation le long du véhicule porteur, avec ou sans rotation à 180° de la cabine de pilotage ou du poste de pilotage, sont prévues dans le cadre de l'invention.

## Revendications

1. Engin agricole pour la coupe de produits sur pied comportant un véhicule porteur (1 ; 34) auquel sont liés au moins une unité de travail frontale (2, 3 ; 49, 50) disposée, lors du travail et en vue suivant une direction d'avance (6 ; 51) du véhicule porteur (1; 34), en avant dudit véhicule porteur (1; 34) et au moins deux unités de travail latérales (4, 5 ; 35, 36) disposées, lors du travail, de part et d'autre d'une zone de travail (30) de ladite(desdites) unité(s) de travail frontale(s) (2, 3 ; 49, 50) et situées en arrière de ladite(desdites) unité(s) de travail frontale(s) (2, 3 ; 49, 50), **caractérisé par le fait que** les unités de travail latérales (4, 5; 35, 36) sont liées à des bras porteurs (14, 15 ; 39, 40) qui sont articulés sur le véhicule porteur (1; 34) et qui permettent de déplacer lesdites unités de travail latérales (4, 5; 35, 36) dans au moins une position de travail située sensiblement au niveau des roues avant (26, 27 ; 37, 38) du véhicule porteur (1 ; 34) et dans une position repliée de transport, et **par le fait que** le véhicule porteur (1 ; 34) comporte une cabine de pilotage (22 ; 41) déplaçable vers l'avant ou vers l'arrière dudit véhicule porteur (1; 34).

2. Engin agricole selon la revendication 1, **caractérisé par le fait que** la cabine de pilotage (41) du véhicule porteur (34) peut pivoter de 180° autour d'un pivot vertical (52) de manière à faciliter le placement des unités de travail latérales (35, 36) en position de transport et de permettre un déplacement du véhicule porteur (34), lorsque les unités de travail frontales (49, 50) et latérales (35, 36) sont en position de transport, dans la direction de transport (53) opposée à celle de la direction d'avance (51) durant le travail.

3. Engin agricole selon la revendication 1, **caractérisé par le fait que** la cabine de pilotage (22) du véhicule porteur (1) peut se déplacer sur des rails (23, 24) le long du véhicule porteur (1) de manière à faciliter le placement des unités de travail latérales (4, 5) en position de travail et/ou de transport et permettre une bonne visibilité pour la conduite dudit véhicule porteur (1).

4. Engin agricole selon la revendication 3, **caractérisé par le fait que** la cabine de pilotage (22) dispose de moyens permettant la conduite, lorsque les unités de travail (2, 3; 4, 5) sont en position de transport, dans la direction de transport (33) opposée à la direction d'avance (6) qui correspond à celle du travail dans les champs.

5. Engin agricole selon l'une quelconque des revendications 1 à 4, **caractérisé par le fait que** les unités de travail latérales (4, 5 ; 35, 36) sont articulées au moyen d'axes sensiblement verticaux (16 ; 45, 46) sur des bras porteurs télescopiques (14, 15 ; 39, 40) de sorte à pouvoir être orientées autour desdits axes (16 ; 45, 46).

6. Engin agricole selon la revendication 5, **caractérisé par le fait que** les unités de travail latérales (4, 5) sont orientables autour de ces axes (16 ; 45, 46) au moyen de vérins hydrauliques (17 ; 47, 48).

7. Engin agricole selon la revendication 5 ou 6, **caractérisé par le fait que** les bras porteurs télescopiques (14, 15 ; 39, 40) sont articulés sur le véhicule porteur (1 ; 34) au moyen d'axes sensiblement horizontaux (19 ; 42).

8. Engin agricole selon la revendication 7, **caractérisé par le fait que** les bras porteurs télescopiques (14, 15 ; 39, 40) sont déplaçables autour des axes sensiblement horizontaux (19 ; 42) au moyen de vérins hydrauliques (21 ; 43, 44) qui sont articulés sur lesdits bras (14, 15 ; 39, 40) et le véhicule porteur (1 ; 34).

9. Engin agricole selon l'une quelconque des revendications 5 à 8, **caractérisé par le fait que** les bras porteurs télescopiques (14, 15) sont articulés sur le véhicule porteur (1) au moyen d'axes sensiblement verticaux (18) permettant de déplacer lesdits bras porteurs télescopiques (14, 15) dans un plan sensiblement horizontal.

10. Engin agricole selon la revendication 9, **caractérisé par le fait que** les bras porteurs télescopiques (14, 15) sont déplaçables autour des axes sensiblement verticaux (18) au moyen de vérins hydrauliques (20) qui sont articulés sur lesdits bras (14, 15) et le véhicule porteur (1).

11. Engin agricole selon l'une quelconque des revendications 5 à 10, **caractérisé par le fait que** les bras porteurs télescopiques (14, 15) sont articulés sur le véhicule porteur (1) sensiblement à hauteur du tiers arrière de celui-ci.

12. Engin agricole selon l'une quelconque des revendications 9 à 11, **caractérisé par le fait que** les unités de travail latérales (4, 5) peuvent prendre au moins une deuxième position de travail située derrière la première position de travail s'étendant sensiblement au niveau des roues avant (26, 27) du véhicule porteur (1).

13. Engin agricole selon la revendication 12, **caractérisé par le fait que** cette deuxième position de travail s'étend, en vue de dessus, dans une zone s'étendant entre les roues avant (26, 27) et les roues arrière (31, 32) du véhicule porteur (1).

14. Engin agricole selon la revendication 12 ou 13, **caractérisé par le fait que** les unités de travail latérales (4, 5) peuvent occuper différentes positions de travail intermédiaires situées entre la première position de travail s'étendant sensiblement au niveau des roues avant (26, 27) du véhicule porteur (1) et cette deuxième position de travail en fonction du report de masses que l'on souhaite obtenir.

15. Engin agricole selon l'une quelconque des revendications 5 à 8, **caractérisé par le fait que** les bras télescopiques (39, 40) sont placés, en vue de dessus, en avant de la cabine de pilotage (41) et s'étendent sensiblement perpendiculairement par rapport au véhicule porteur (34) durant le travail.

16. Engin agricole selon l'une quelconque des revendications précédentes, **caractérisé par le fait que** les unités de travail latérales (4, 5) sont repliées dans la position de transport, sensiblement à la verticale par rapport au plan de travail.

17. Engin agricole selon l'une quelconque des revendications 1 à 15, **caractérisé par le fait que** les unités de travail latérales (35, 36) sont repliées, dans la position de transport, au-dessus et le long du véhicule porteur (34), dans une position sensiblement horizontale.

18. Engin agricole selon l'une quelconque des revendications précédentes **caractérisé par le fait qu**'il possède deux unités de travail frontales (2, 3 ; 49, 50) qui sont repliées, dans la position de transport, sensiblement à la verticale par rapport au plan de travail.

19. Engin agricole selon l'une quelconque des revendications précédentes, **caractérisé par le fait que** les unités de travail latérales (4, 5; 35, 36) et frontales (2, 3; 49, 50) comportent au moins une barre de coupe (7) et éventuellement un dispositif de conditionnement des plants et/ou un dispositif de regroupement (8) de ces plants coupés en andains.

20. Engin agricole selon l'une quelconque des revendications précédentes, **caractérisé par le fait que** le véhicule porteur (1 ; 34) peut se déplacer dans deux directions opposées, une direction d'avance (6 ; 51) pour le travail et une direction de transport (33 ; 53).

## Claims

1. Agricultural machine for cutting standing products comprising a carrier vehicle (1; 34) to which there are connected at least one frontal working unit (2, 3; 49,50) positioned, during work and when viewed in a direction of forward travel (6; 51) of the carrier vehicle (1; 34), forward of the said carrier vehicle (1; 34), and at least two lateral working units (4, 5; 35, 36) positioned, during work, on each side of a working area (30) of the said frontal working unit(s) (2, 3; 49, 50) and situated behind the said frontal working unit(s) (2, 3; 49, 50), ***characterized in* that** the lateral working units (4, 5; 35, 36) are connected to carrier arms (14, 15; 39, 40) which are articulated to the carrier vehicle (1; 34) and allow the said lateral working units (4, 5; 35, 36) to be moved into at least one work position situated substantially level with the front wheels (26, 27; 37, 38) of the carrier vehicle (1; 34) and into a folded transport position, and **in that** the carrier vehicle (1; 34) comprises a driver's cab (22; 41) that can be moved toward the front or toward the rear of the said carrier vehicle (1; 34).

2. Agricultural machine according to claim 1, ***characterized in* that** the driver's cab (41) of the carrier vehicle (34) can pivot through 180° about a vertical pivot (52) so as to facilitate the placement of the lateral working units (35, 36) in the transport position and allow the carrier vehicle (34) to move when the frontal working units (49, 50) and the lateral working units (35, 36) are in the transport position, in the transport direction (53) which is the opposite direction to the direction of forward travel (51) during work.

3. Agricultural machine according to claim 1, ***characterized in* that** the driver's cab (22) of the carrier vehicle (1) can move on rails (23, 24) along the carrier vehicle (1) so as to facilitate the placement of the lateral working units (4, 5) in the work position and/or the transport position and provide good visibility for driving the said carrier vehicle (1).

4. Agricultural according to claim 3, ***characterized in* that** the driver's cab (22) has means allowing driving, when the working units (2, 3; 4, 5) are in the transport position, in the transport direction (33) which is the opposite direction to the direction of forward travel (6) which corresponds to the direction of work in the fields.

5. Agricultural machine according to anyone of claims 1 to 4, ***characterized in* that** the lateral working units (4, 5; 35, 36) are articulated by means of substantially vertical axes (16; 45, 46) on telescopic carrier arms (14, 15; 39, 40) so that they can be orientated about the said axes (16; 45, 46).

6. Agricultural machine according to claim 5, ***characterized in* that** the lateral working units (4, 5) can be orientated about these axes (16; 45, 46) by means of hydraulic rams (17; 47, 48).

7. Agricultural machine according to claim 5 or 6, ***characterized in* that** the telescopic carrier arms (14, 15; 39, 40) are articulated to the carrier vehicle (1; 34) by means of substantially horizontal axes (19; 42).

8. Agricultural machine according to claim 7, ***characterized in* that** the telescopic carrier arms (14, 15; 39, 40) can be moved about substantially horizontal axes (19; 42) by means of hydraulic rams (21; 43, 44) which are articulated to the said arms (14, 15; 39, 40) and to the carrier vehicle (1; 34).

9. Agricultural machine according to anyone of claims 5 to 8, ***characterized in* that** the telescopic carrier arms (14, 15) are articulated to the carrier vehicle (1) by means of substantially vertical axes (18) allowing the said telescopic carrier arms (14, 15) to be moved in a substantially horizontal plane.

10. Agricultural machine according to claim 9, ***characterized in* that** the telescopic carrier arms (14, 15) can be moved about substantially vertical axes (18) by means of hydraulic rams (20) which are articulated to the said arms (14, 15) and to the carrier vehicle (1).

11. Agricultural machine according to anyone of claims 5 to 10, ***characterized in* that** the telescopic carrier arms (14, 15) are articulated to the carrier vehicle (1) substantially in the rear one-third of the latter.

12. Agricultural machine according to anyone of claims 9 to 11, ***characterized in* that** the lateral working units (4, 5) can adopt at least a second work position situated behind the first work position extending substantially level with the front wheels (26, 27) of the carrier vehicle (1).

13. Agricultural machine according to claim 12, ***characterized in* that** this second work position extends, when viewed from above, in a zone lying between the front wheels (26, 27) and the rear wheels (31, 32) of the carrier vehicle (1).

14. Agricultural machine according to claim 12 or 13, ***characterized in* that** the lateral working units (4, 5) can occupy various intermediate work positions situated between the first work position extending substantially level with the front wheels (26, 27) of the carrier vehicle (1) and this second work position depending on the weight transfer that is to be obtained.

15. Agricultural machine according to anyone of claims 5 to 8, ***characterized in* that** the telescopic arms (39, 40) are positioned, when viewed from above, forward of the driver's cab (41) and extend substantially perpendicular to the carrier vehicle (34) during work.

16. Agricultural machine according to anyone of the preceding claims, ***characterized in* that** the lateral working units (4, 5) are folded in the transport position substantially vertically with regard to the plane of work.

17. Agricultural machine according to anyone of claims 1 to 15, ***characterized in* that** the lateral working units (35, 36) are folded, in the transport position, above and along the carrier vehicle (34), in a substantially horizontal position.

18. Agricultural machine according to anyone of the preceding claims, ***characterized in* that** it possesses two frontal working units (2, 3; 49, 50) which are folded, in the transport position, substantially vertically with regard to the plane of work.

19. Agricultural machine according to anyone of the preceding claims, ***characterized in* that** the lateral working units (4, 5; 35, 36) and frontal working units (2, 3; 49, 50) comprise at least one cutter bar (7) and possibly a device for conditioning the plants and/or a device (8) for grouping these cut plants into windrows.

20. Agricultural machine according to anyone of the preceding claims, ***characterized in* that** the carrier vehicle (1; 34) can move in two opposite directions, a direction of forward travel (6; 51) for work and a transport direction (33; 53).

## Patentansprüche

1. Landwirtschaftliche Maschine zum Mähen von stehenden Produkten, mit einem Tragfahrzeug (1; 34), mit dem mindestens eine vordere Arbeitseinheit (2, 3; 49, 50), die bei der Arbeit und in eine Vorfahrtrichtung (6; 51) des Tragfahrzeugs (1; 34) gesehen vorne am Tragfahrzeug (1; 34) angeordnet ist, und mindestens zwei seitliche Arbeitseinheiten (4, 5; 35, 36) verbunden sind, die bei der Arbeit beiderseits einer Arbeitszone (30) der vorderen Arbeitseinheit(en) (2, 3; 49, 50) angeordnet sind und sich hinter der (den) vorderen Arbeitseinheit(en) (2, 3; 49, 50) befinden, ***dadurch gekennzeichnet,* dass** die seitlichen Arbeitseinheiten (4, 5; 35, 36) mit Tragarmen (14, 15; 39, 40) verbunden sind, die auf dem Tragfahrzeug (1; 34) angelenkt sind und es ermöglichen, die seitlichen Arbeitseinheiten (4, 5; 35, 36) in mindestens eine Arbeitsposition, die sich im Wesentlichen im Bereich der Vorderräder (26, 27; 37, 38) des Tragfahrzeugs (1; 34) befindet, und in eine zusammengeklappte Transportposition zu verschieben, *und **dadurch**,* **dass** das Tragfahrzeug (1; 34) eine Steuerkabine (22; 41) umfasst, die nach vorne oder nach hinten zum Tragfahrzeug (1; 34) verschoben werden kann.

2. Landwirtschaftliche Maschine nach Anspruch 1, ***dadurch gekennzeichnet,* dass** die Steuerkabine (41) des Tragfahrzeugs (34) um 180° um einen vertikalen Zapfen (52) schwenken kann, um die Anordnung der seitlichen Arbeitseinheiten (35, 36) in Transportposition zu erleichtern und ein Fahren des Tragfahrzeugs (34), wenn sich die vorderen Arbeitseinheiten (49, 50) und die seitlichen Arbeitseinheiten (35, 36) in Transportposition befinden, in die Transportrichtung (53), die zu jener der Vorfahrtrichtung (51) während der Arbeit entgegen gesetzt ist, zu ermöglichen.

3. Landwirtschaftliche Maschine nach Anspruch 1, ***dadurch gekennzeichnet,* dass** sich die Steuerkabine (22) des Tragfahrzeugs (1) auf Schienen (23, 24) entlang des Tragfahrzeugs (1) verschieben kann, um die Anordnung der seitlichen Arbeitseinheiten (4, 5) in Arbeits- und/oder Transportposition zu erleichtern und eine gute Sichtbarkeit für die Führung des Tragfahrzeugs (1) zu ermöglichen.

4. Landwirtschaftliche Maschine nach Anspruch 3, ***dadurch gekennzeichnet,* dass** die Steuerkabine (22) über Mittel verfügt, die, wenn sich die Arbeitseinheiten (2, 3; 4, 5) in Transportposition befinden, das Fahren in Transportrichtung (33) ermöglichen, die zur Vorfahrtrichtung (6), die jener der Arbeit auf den Feldern entspricht, entgegen gesetzt ist.

5. Landwirtschaftliche Maschine nach irgend einem der Ansprüche 1 bis 4, ***dadurch gekennzeichnet,* dass** die seitlichen Arbeitseinheiten (4, 5; 35, 36) mittels im Wesentlichen vertikalen Achsen (16; 45, 46) auf teleskopischen Tragarmen (14, 15; 39, 40) angelenkt sind, um um die Achsen (16; 45, 46) ausgerichtet werden zu können.

6. Landwirtschaftliche Maschine nach Anspruch 5, ***dadurch gekennzeichnet,* dass** die seitlichen Arbeitseinheiten (4, 5) um diese Achsen (16; 45, 46) mittels Hydraulikzylindern (17; 47, 48) ausrichtbar sind.

7. Landwirtschaftliche Maschine nach Anspruch 5 oder 6, ***dadurch gekennzeichnet,* dass** die teleskopischen Tragarme (14, 15; 39, 40) auf dem Tragfahrzeug (1; 34) mittels im Wesentlichen horizontalen Achsen (19; 42) angelenkt sind.

8. Landwirtschaftliche Maschine nach Anspruch 7, ***dadurch gekennzeichnet,* dass** die teleskopischen Tragarme (14, 15; 39, 40) um im Wesentlichen horizontale Achsen (19; 42) mittels Hydraulikzylindern (21; 43, 44) verschiebbar sind, die auf den Armen (14, 15; 39, 40) und dem Tragfahrzeug (1; 34) angelenkt sind.

9. Landwirtschaftliche Maschine nach irgend einem der Ansprüche 5 bis 8, ***dadurch gekennzeichnet,* dass** die teleskopischen Tragarme (14, 15) auf dem Tragfahrzeug (1) mittels im Wesentlichen vertikalen Achsen (18) angeordnet sind, die es ermöglichen, die teleskopischen Tragarme (14, 15) in einer im Wesentlichen horizontalen Ebene zu verschieben.

10. Landwirtschaftliche Maschine nach Anspruch 9, ***dadurch gekennzeichnet,* dass** die teleskopischen Tragarme (14, 15) um im Wesentlichen vertikale Achsen (18) mittels Hydraulikzylindern (20) verschiebbar sind, die auf den Armen (14, 15) und dem Tragfahrzeug (1) angelenkt sind.

11. Landwirtschaftliche Maschine nach irgend einem der Ansprüche 5 bis 10, ***dadurch gekennzeichnet,* dass** die teleskopischen Tragarme (14, 15) auf dem Tragfahrzeug (1) im Wesentlichen im Bereich des hinteren Drittels desselben angeordnet sind.

12. Landwirtschaftliche Maschine nach irgend einem der Ansprüche 9 bis 11, ***dadurch gekennzeichnet,* dass** die seitlichen Arbeitseinheiten (4, 5) mindestens eine zweite Arbeitsposition einnehmen können, die sich hinter der ersten Arbeitsposition befindet, die sich im Wesentlichen im Bereich der Vorderräder (26, 27) des Tragfahrzeugs (1) befindet.

13. Landwirtschaftliche Maschine nach Anspruch 12, ***dadurch gekennzeichnet,* dass** sich diese zweite Arbeitsposition in Draufsicht in einer Zone befindet, die sich zwischen den Vorderrädern (26, 27) und den Hinterrädern (31, 32) des Tragfahrzeugs (1) erstreckt.

14. Landwirtschaftliche Maschine nach Anspruch 12 oder 13, ***dadurch gekennzeichnet,* dass** die seitlichen Arbeitseinheiten (4, 5) verschiedene Zwischenarbeitspositionen einnehmen können, die sich zwischen der ersten Arbeitsposition, die sich im Wesentlichen im Bereich der Vorderräder (26, 27) des Tragfahrzeugs (1) befindet, und dieser zweiten Arbeitsposition in Abhängigkeit von der Masseübertragung, die erzielt wird, befinden.

15. Landwirtschaftliche Maschine nach irgend einem der Ansprüche 5 bis 8, ***dadurch gekennzeichnet,* dass** die Teleskoparme (39, 40) in Draufsicht vor der Steuerkabine (41) angeordnet sind und sich im Wesentlichen senkrecht zum Tragfahrzeug (34) während der Arbeit erstrecken.

16. Landwirtschaftliche Maschine nach irgend einem der vorhergehenden Ansprüche, ***dadurch gekennzeichnet,* dass** die seitlichen Arbeitseinheiten (4, 5) in die Transportposition im Wesentlichen in die Vertikale zur Arbeitsebene zusammengeklappt sind.

17. Landwirtschaftliche Maschine nach irgend einem der Ansprüche 1 bis 15, ***dadurch gekennzeichnet,* dass** die seitlichen Arbeitseinheiten (35, 36) in Transportposition über und entlang des Tragfahrzeugs (34) in eine im Wesentlichen horizontale Position zusammengeklappt sind.

18. Landwirtschaftliche Maschine nach irgend einem der vorhergehenden Ansprüche, ***dadurch gekennzeichnet,* dass** sie zwei vordere Arbeitseinheiten (2, 3; 49, 50) umfasst, die in Transportposition im Wesentlichen in die Vertikale zur Arbeitsebene zusammengeklappt sind.

19. Landwirtschaftliche Maschine nach irgend einem der vorhergehenden Ansprüche, ***dadurch gekennzeichnet,* dass** die seitlichen Arbeitseinheiten (4, 5; 35, 36) und vorderen Arbeitseinheiten (2, 3; 49, 50) mindestens einen Mähbalken (7) und eventuell eine Vorrichtung zum Konditionieren der Pflanzen und/oder eine Vorrichtung (8) zum Gruppieren dieser geschnittenen Pflanzen zu Schwaden umfassen.

20. Landwirtschaftliche Maschine nach irgend einem der vorhergehenden Ansprüche, ***dadurch gekennzeichnet,* dass** sich das Tragfahrzeug (1; 34) in zwei entgegen gesetzte Richtungen, eine Vorfahrtrichtung (6; 51) für die Arbeit und eine Transportrichtung (33; 53) bewegen kann.
